# FASCICULE DE BREVET EUROPEEN

(11) **EP 3 849 026 B1**
(45) Date de publication et mention de la délivrance du brevet: **30.04.2025**
(21) Numéro de dépôt: 21150403.0
(22) Date de dépôt: 06.01.2021
(51) Int. Cl.: H01R 13/623, H01R 13/625, H01R 13/639, H01R 24/00, H01R 101/00

(54) **ENSEMBLE POUR VERROUILLER DEUX PARTIES PAR UN SYSTÈME À BAILLONETTE, ET PROCÉDÉ CORRESPONDANT**
ANORDNUNG ZUR VERRIEGELUNG ZWEIER TEILE DURCH EIN BAJONETTSYSTEM UND ENTSPRECHENDES VERFAHREN
ASSEMBLY FOR LOCKING TWO PARTS BY A BAYONET SYSTEM, AND CORRESPONDING METHOD

(30) Priorité: 08.01.2020 FR 2000128
(43) Date de publication de la demande: 14.07.2021
(73) Titulaire: Ilie, Razvan, 78150 Rocquencourt (FR)
(72) Inventeur: Ilie, Razvan, 78150 Rocquencourt (FR)
(74) Mandataire: Lavoix

(56) Documents cités:
- CN-A- 110 571 591
- FR-A1- 3 068 092
- US-A- 3 470 524
- US-B1- 6 386 897
- US-B2- 7 681 925
- US-B2- 7 731 243

## Description

La présente invention concerne un ensemble comprenant une première partie et une deuxième partie mobiles l'une par rapport à l'autre entre une configuration verrouillée, dans laquelle la première partie et la deuxième partie sont en partie emboitées l'une dans l'autre et verrouillées l'une sur l'autre, et une configuration déverrouillée, dans laquelle la première partie et la deuxième partie sont à l'écart l'une de l'autre.

L'invention concerne également un procédé de verrouillage-déverrouillage correspondant.

Un tel ensemble sert par exemple à connecter et déconnecter deux câbles électriques.

Les ensembles existants à baïonnette ont une bonne robustesse, mais une ergonomie discutable. En effet, le fait de devoir effectuer un mouvement de rotation pour assurer le verrouillage des deux parties est parfois considéré comme fastidieux par un utilisateur.

Le document CN-A-110 571 591 décrit un ensemble dans lequel la première partie comprend une bague mobile en rotation autour de l'axe de connexion et définissant une rainure. La deuxième partie comporte un pion adapté pour coulisser dans la rainure.

Le document US 3 470 524 A décrit un ensemble dans lequel une bague 50 est montée coulissante axialement sur l'une des parties.

Un but de l'invention est donc de fournir un ensemble tel que décrit ci-dessus qui permette un verrouillage aussi robuste que les ensembles à baïonnette, tout en présentant une meilleure ergonomie.

A cet effet, l'invention a pour objet un ensemble selon la revendication 1.

Selon des modes de réalisation particuliers, l'ensemble comprend l'une ou plusieurs des caractéristiques correspondant aux revendications dépendantes.

L'invention a également pour objet un procédé selon la revendication 10.

L'invention sera mieux comprise à la lecture de la description qui va suivre, donnée uniquement à titre d'exemple et faite en se référant aux dessins annexés sur lesquels :
la figure 1 est une vue en perspective d'un ensemble selon l'invention dans la configuration déverrouillée,
la figure 2 est une vue en perspective, sous un autre angle, de l'ensemble représenté sur la figure 1,
la figure 3 est une vue partielle de la première partie de l'ensemble représenté sur les figures 1 et 2, la bague étant représentée en transparence dans sa position de repos,
la figure 4 est une vue en coupe selon un plan radial passant par l'axe de connexion de l'ensemble représenté sur les figures 1 et 2,
la figure 5 est une vue partielle de l'ensemble représenté sur les figures 1, 2 et 4, le pion réalisant un premier glissement sur la rampe de verrouillage,
la figure 6 est une vue en coupe de l'ensemble, selon un plan radial passant par le pion, la première partie et la deuxième partie étant dans la configuration représentée sur la figure 5,
la figure est 7 est une vue de détail de l'ensemble représenté sur les figures 1 et 2, la bague étant dans la première position intermédiaire par rapport à la première partie, le pion ayant presque terminé le premier glissement sur la rampe de verrouillage,
la figure 8 est une vue en coupe radiale de l'ensemble représenté sur les figures 1 et 2, la première partie et la deuxième partie étant dans la configuration représentée sur la figure 7,
la figure 9 est une vue en coupe radiale de l'ensemble représenté sur les figures 1 et 2, la première partie et la deuxième partie étant dans la configuration verrouillée, le pion étant reçu dans le premier logement,
la figure 10 est une vue de détail de l'ensemble représenté sur les figures 1 et 2, le pion réalisant un deuxième glissement sur la rampe de déverrouillage,
la figure 11 est une vue analogue à la figure 10, le pion ayant terminé le deuxième glissement le long de la rampe de déverrouillage, et
la figure 12 est une vue de détail de la deuxième partie d'un ensemble constituant une variante de l'ensemble représenté sur les figures 1 à 11, la deuxième partie définissant une rampe de déverrouillage ayant une forme plus complexe que celle représentée sur les figures 1, 7, 10 et 11.

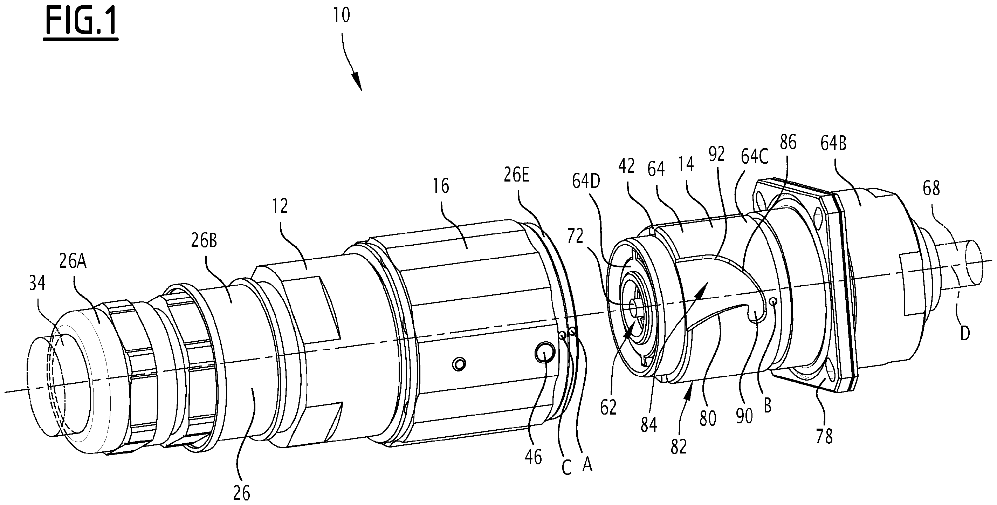

En référence aux figures 1 à 11, on décrit un ensemble 10 selon l'invention.

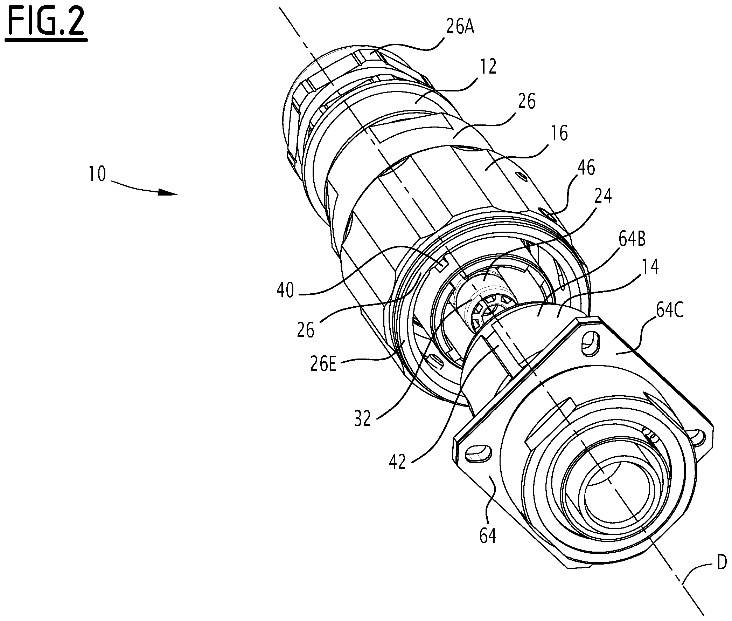

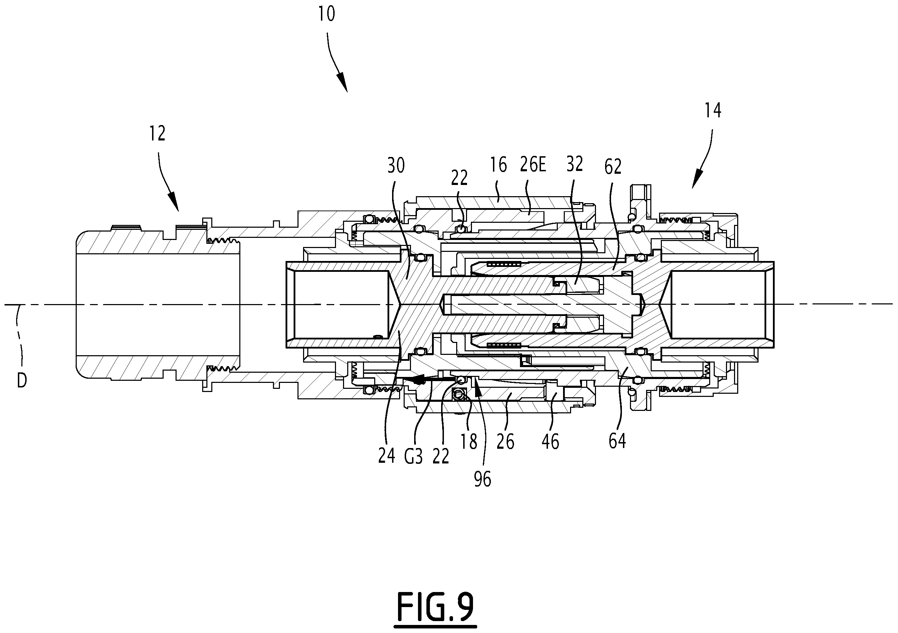

Comme visible sur les figures 1 et 2, l'ensemble 10 comprend une première partie 12 et une deuxième partie 14 mobiles l'une par rapport à l'autre en translation selon un axe de connexion D entre une configuration verrouillée, représentée sur la figure 9, dans laquelle la première partie et la deuxième partie sont en partie emboitées l'une dans l'autre et verrouillées l'une sur l'autre, et une configuration déverrouillée, représentée sur les figures 1 et 2, dans laquelle la première partie et la deuxième partie sont à l'écart l'une de l'autre.

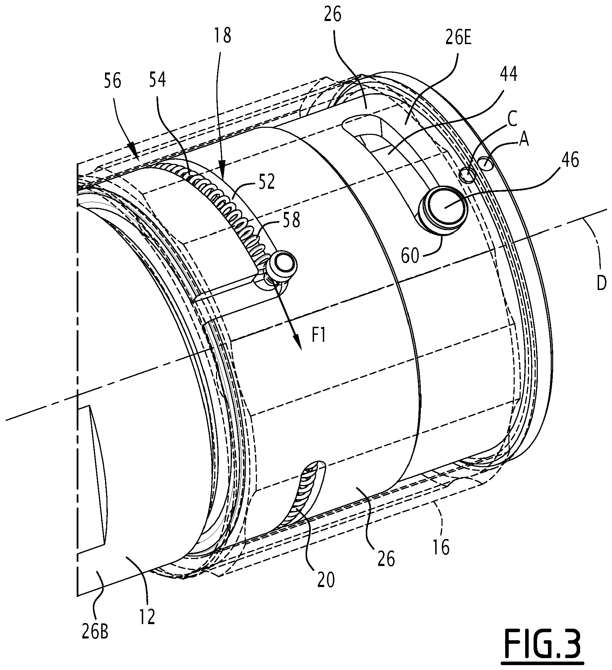

L'ensemble 10 comprend également une bague 16 montée rotative sur la première partie 12 autour de l'axe de connexion D, et un système de rappel 18 (visible notamment sur la figure 3) adapté pour exercer une force de rappel F1 sur la bague 16 vers une position de repos de la bague par rapport à la première partie 12 (représentée sur les figures 1 à 3).

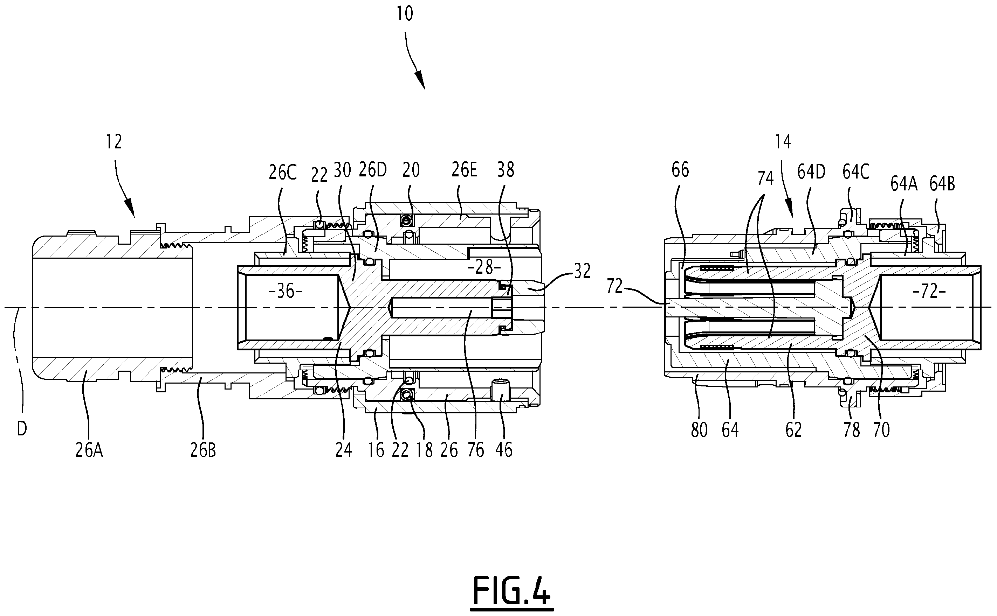

Dans l'exemple représenté, l'ensemble 10 possède une symétrie d'ordre 2 autour de l'axe de connexion D, si bien qu'il comprend également un deuxième système de rappel 20 (figure 4) se déduisant du système de rappel 18 par une rotation de 180° autour de l'axe de connexion D.

Sur une variante non représentée, l'ensemble 10 ne comprend qu'un seul système de rappel, ou bien possède une symétrie d'ordre supérieur à deux autour de l'axe de connexion D, par exemple d'ordre trois ou quatre. Dit autrement, selon diverses variantes, l'ensemble 10 peut comprendre un, trois, ou quatre systèmes de rappel, voire plus. Les différents systèmes de rappel se déduisent les uns des autres par des rotations autour de l'axe de connexion D d'angles égaux à 360° / N, N étant l'ordre de la symétrie.

Avantageusement, l'ensemble 10 comprend également un joint d'étanchéité 22 torique (figure 4) fixé sur la première partie 12 et adapté pour assurer une étanchéité, notamment aux liquides et aux poussières, entre la première partie 12 et la deuxième partie 14 dans la configuration verrouillée.

La première partie 12 comprend avantageusement une marque A et la deuxième partie 14 une marque B permettant d'aligner la première partie et la deuxième partie pendant une phase de connexion de l'ensemble 10.

La bague 16 comprend avantageusement une marque C permettant de repérer la position de la bague par rapport à la première partie 12.

Dans l'exemple représenté, la première partie 12 comprend un contact électrique mâle 24, et un premier manchon 26 isolant électrique entourant le contact électrique mâle 24 autour de l'axe de connexion D.

Selon une variante non représentée, la première partie 12 comprend un contact électrique femelle, et la deuxième partie 14 un contact électrique mâle.

Selon une autre variante encore, la première partie 12 et la deuxième partie 14 ne contiennent pas de contacts électriques. Dans ce cas, l'ensemble 10 réalise uniquement une connexion mécanique de la première partie 12 et de la deuxième partie 14. L'ensemble 10 sert alors par exemple à assurer la connexion entre des conduites d'huile, d'eau, ou de gaz tels que de l'air comprimé.

Le contact électrique mâle 24 est situé dans un logement 28 défini par le premier manchon 26. Le contact électrique mâle 24 s'étend axialement. Le contact électrique mâle 24 comprend une partie principale 30 électriquement conductrice, et avantageusement un embout 32 isolant destiné à protéger un utilisateur de tout contact électrique avec la partie principale 30 dans la configuration déverrouillée.

Par « isolant », on entend ici un élément dont la résistivité électrique à 300 K est par exemple supérieure ou égale à 105 Ω.m.

Par « conducteur », on entend ici un élément dont 15 la résistivité électrique à 300 K est par exemple inférieure ou égale à 10-5 Ω.m.

Le contact électrique mâle 24 est adapté pour être relié électriquement à un câble électrique 34 (figure 1) axialement à l'intérieur du premier manchon 26.

La partie principale 30 définit par exemple un logement 36 adapté pour recevoir le câble 34.

L'embout 32 est avantageusement de forme annulaire autour de l'axe de connexion D et fixé sur une extrémité axiale 38 de la partie principale 30.

Le premier manchon 26 est avantageusement constitué de plusieurs parties 26A, 26B, 26C, 26D et 26E fixées les unes sur les autres.

Le premier manchon 26 forme un rail 40 (figure 2) configuré pour coulisser axialement dans une rainure 42 de la deuxième partie 14 lorsque la première partie 12 et la deuxième partie 14 passent de la configuration déverrouillée à la configuration verrouillée.

Selon une variante non représentée, le rail 40 est formé par une autre portion de la première partie 12, par exemple le par contact électrique.

Dans l'exemple représenté, le premier manchon 26 comprend une paroi 26E s'étendant au moins en partie autour de l'axe de connexion D et définissant une lumière 44 (figure 3) s'étendant perpendiculairement à l'axe de connexion D et traversée radialement par un pion 46 de la bague 16.

Le rail 40 est adapté pour empêcher une rotation de la première partie 12 par rapport à la deuxième partie 14 autour de l'axe de connexion D lorsque la première partie 12 et la deuxième partie 14 passent de la configuration déverrouillée à la configuration verrouillée.

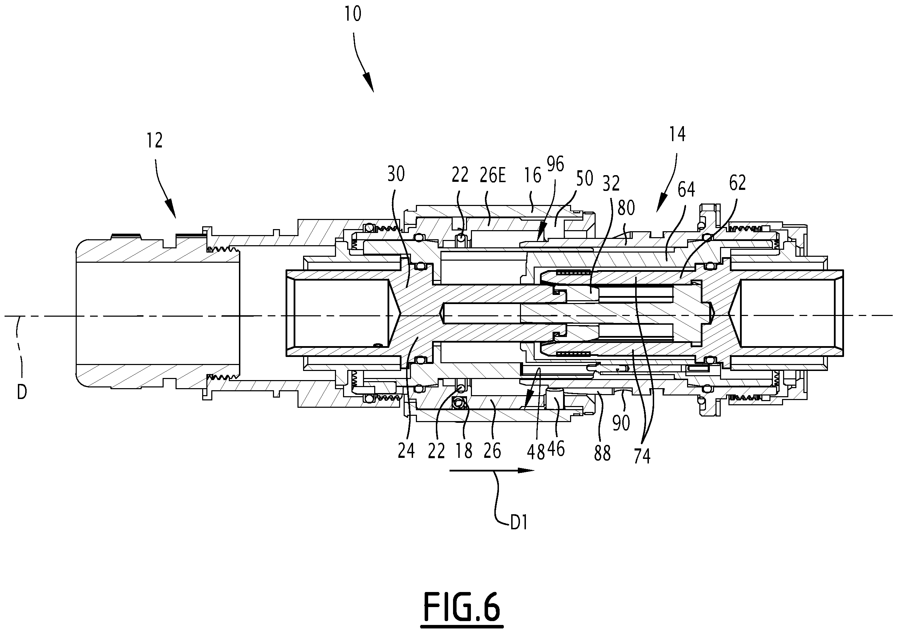

La bague 16 définit une surface 48 (figure 6) radialement intérieure par rapport à l'axe de connexion D, et comporte au moins le pion 46 déjà mentionné, le pion faisant saillie à partir de la surface 48 vers l'axe de connexion D à travers la lumière 44.

Dans l'exemple représenté, la bague 16 possède également une symétrie d'ordre 2 autour de l'axe de connexion D, si bien qu'elle comprend un deuxième pion 50 qui se déduit du pion 46 par une rotation de 180° autour de l'axe de connexion D.

Selon des variantes non représentées, la bague 16 peut ne comporter qu'un seul pion, trois pions, quatre pions ou plus. Les positions des pions se déduisent avantageusement les unes des autres par des rotations de 360° / N, N étant le nombre de pions.

Le système de rappel 18 comprend une rainure 52 formée par la première partie 12 (ici plus exactement par la paroi 26E du premier manchon 26), et un ressort 54 logé dans la rainure 52.

La rainure 52 est orientée circonférentiellement autour de l'axe de connexion D.

Le ressort 54 a une première extrémité 56 fixée sur la première partie 12, et une deuxième extrémité 58 fixée sur la bague 16.

Dans l'exemple représenté, le ressort 54 est adapté pour travailler en compression et repousser la bague 16 vers sa position de repos par rapport à la première partie 12, dans laquelle le pion 46 butte contre une extrémité 60 de la lumière 44.

La deuxième partie 14 comprend un contact électrique femelle 62 adapté pour recevoir le contact électrique mâle 24 dans la configuration verrouillée, et un deuxième manchon 64 isolant entourant le contact électrique femelle autour de l'axe de connexion D.

Le contact électrique femelle 62 est situé dans un logement 66 défini par le deuxième manchon 64 et est adapté pour être relié électriquement à un câble électrique 68 (figure 1).

Le contact électrique femelle 62 comprend une partie principale 70 électriquement conductrice définissant un logement 72 adapté pour recevoir le câble électrique 68. Le contact électrique femelle 62 comprend avantageusement une tige isolante 72 faisant saillie axialement de la partie principale 70 qui, avec le deuxième manchon 64, empêche un utilisateur de toucher la partie principale 70 lorsque la première partie 12 et la deuxième partie 14 sont dans la configuration déverrouillée.

Avantageusement, la partie principale 70 comprend une pluralité de lamelles 74 s'étendant axialement et disposées angulairement autour de l'axe de connexion D.

Dans la configuration verrouillée, les lamelles 74 enserrent radialement la partie principale 30 du contact électrique mâle 24, et la tige isolante 72 est reçue dans un logement 76 défini par la partie principale 30 du contact électrique mâle 34.

Le deuxième manchon 64 comprend plusieurs parties 64A, 64B, 64C et 64D fixées les unes sur les autres.

Le deuxième manchon 64 forme avantageusement une collerette 78, par exemple de forme carrée en vue selon l'axe de connexion D, adaptée pour permettre d'attacher la deuxième partie 14 à un support non représenté.

Le deuxième manchon 64 comprend une paroi 80 s'étendant autour de l'axe de connexion D et définissant une surface radialement extérieure 82 formant un évidement radial 84.

L'évidement radial 84 s'ouvre axialement du côté de la première partie 12. L'évidement radial 84 possède un bord 86 curviligne.

Le bord curviligne 46 forme une rampe de verrouillage 88, un premier logement 90, et une rampe de déverrouillage 92.

Selon une variante non représentée, la rampe de verrouillage 88, le premier logement 90, et la rampe de déverrouillage 92 ne sont pas formés par un évidement, mais par une échancrure ménagée dans le deuxième manchon 64. L'échancrure définit le bord 86 curviligne.

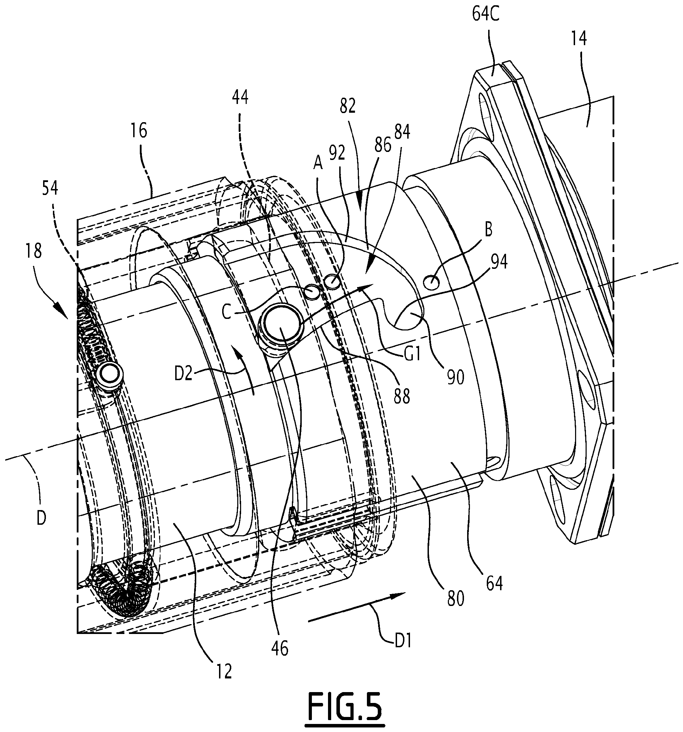

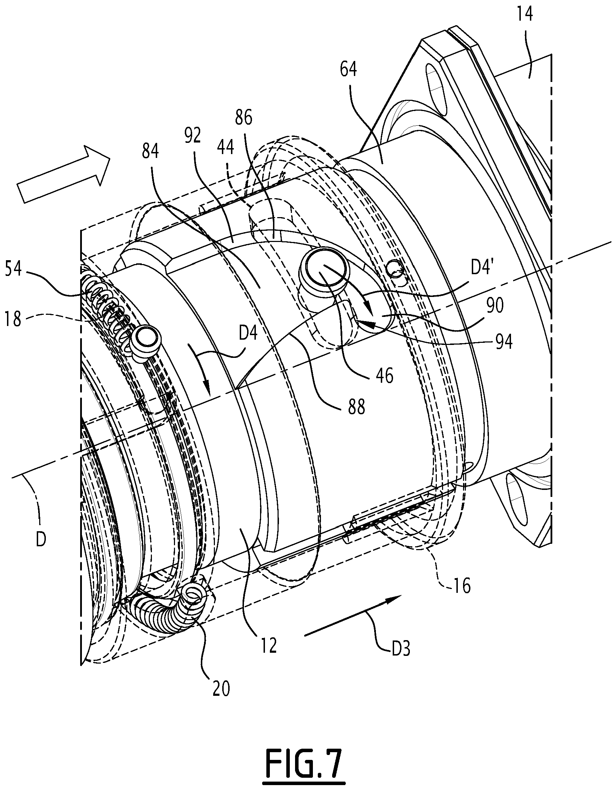

La rampe de verrouillage 88 est configurée pour qu'un déplacement manuel en translation (représenté par la flèche D1 sur la figure 5) de la première partie 12 et de la deuxième partie 14 axialement l'une par rapport à l'autre de la configuration déverrouillée à une configuration intermédiaire représentée sur la figure 7 provoque un premier glissement G1 du pion 46 sur la rampe de verrouillage 88. La rampe de verrouillage 88 est également configurée pour provoquer un déplacement automatique (figuré par une flèche D2 sur la figure 5) de la bague 16 angulairement dans un sens par rapport à la première partie 12 entre la position de repos et une première position intermédiaire de la bague représentée sur la figure 7.

Dans la première position intermédiaire, le déplacement angulaire de la bague 16 par rapport à la première partie 12 passe par un maximum local.

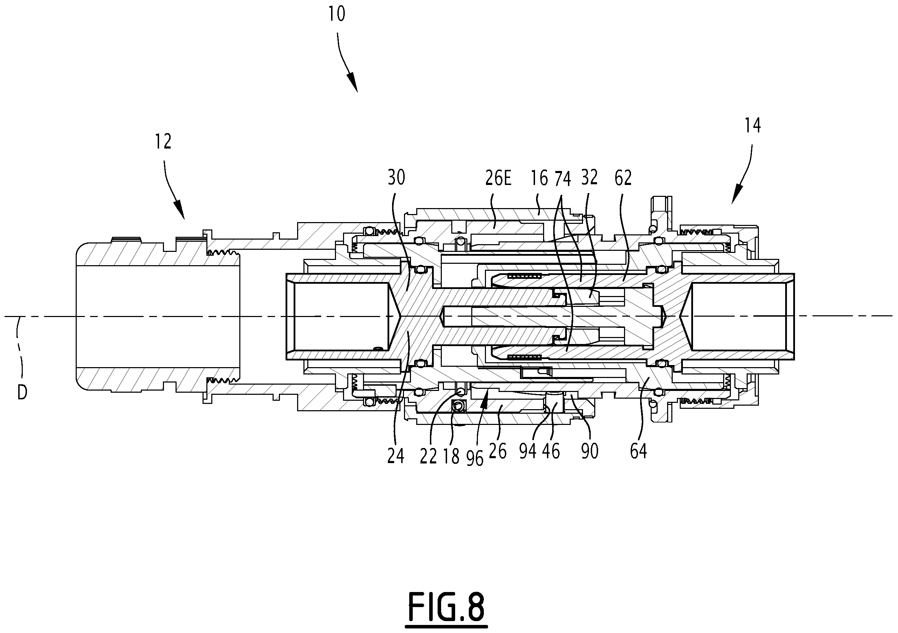

La rampe de verrouillage 88 et le premier logement 90 sont configurés pour qu'un déplacement manuel (représenté par une flèche D3 sur la figure 7) de la première partie 12 et de la deuxième partie 14 axialement l'une par rapport à l'autre de la configuration intermédiaire (représentée sur la figure 7) à la configuration verrouillée permette un déplacement automatique (représenté par une flèche D4 sur la figure 7) de la bague 16 angulairement en sens contraire par rapport à la première partie 12, de la première position intermédiaire à une position de verrouillage (représentée sur la figure 8) sous l'action du système de rappel 18.

Dans la position de verrouillage de la bague 16, le pion 46 est reçu dans le premier logement 90 qui définit une butée axiale 94 adaptée pour bloquer le pion 46 axialement par rapport à la deuxième partie 14 et empêcher un déboîtement de l'ensemble 10.

Le déplacement de la bague 16 de la position intermédiaire, représentée sur la figure 7, à la position de verrouillage, représentée sur la figure 8, est adapté pour provoquer un déplacement D4' du pion 46 à l'issue duquel le pion 46 est reçu dans le premier logement 90.

Dans l'exemple représenté, la position de verrouillage de la bague 16 est sensiblement identique à la position de repos. Dit autrement, le passage de la bague 16 de la position de repos représentée sur la figure 5, à la position intermédiaire représentée sur la figure 7 correspond à un déplacement angulaire dans le sens D2, tandis que le déplacement de la bague 16 de la position intermédiaire à la position de verrouillage représentée sur la figure 8 correspond à un déplacement angulaire inverse dans le sens D4 par rapport à la première partie 12.

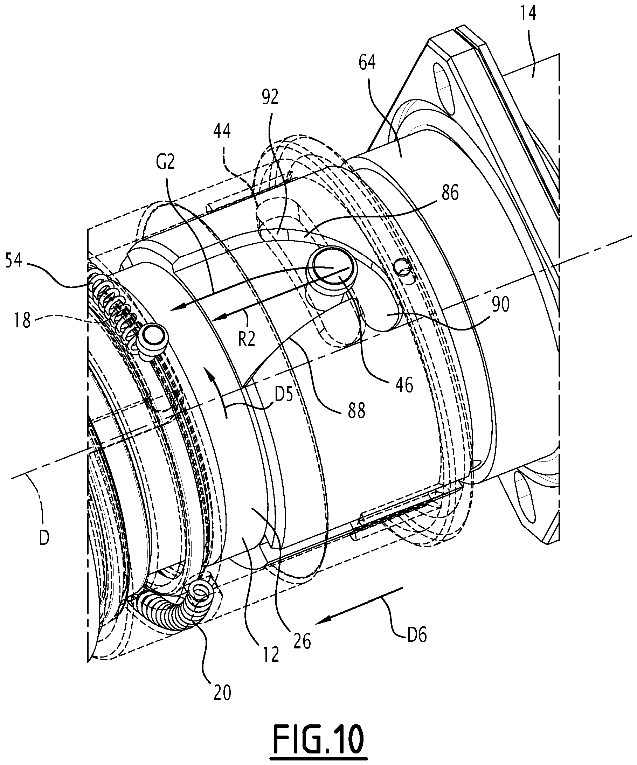

La rampe de déverrouillage 92 est configurée pour qu'un déplacement manuel (représenté par une flèche D5 sur la figure 10) de la bague 16 en rotation autour de l'axe de connexion D par rapport à la première partie 12 dans le même sens que lors du premier glissement G1, à partir de la position de verrouillage représentée sur la figure 9, sorte le pion 46 du premier logement 90, et provoque un deuxième glissement G2 du pion 46 sur la rampe de déverrouillage 92, la rampe de déverrouillage 92 réagissant axialement (force R2 représentée sur la figure 10) pour éloigner la première partie 12 et la deuxième partie 14 axialement l'une de l'autre à partir de la configuration verrouillée (flèche D6 sur la figure 10).

Le deuxième glissement G2 du pion 46 sur la rampe de déverrouillage 92 à partir du premier logement 90 est adapté pour provoquer un glissement axial G3 (figure 9) du joint d'étanchéité 22 sur une surface d'étanchéité 96 définie par le deuxième manchon 64 et adaptée pour coopérer avec le joint d'étanchéité dans la configuration verrouillée.

La rampe de déverrouillage 92 est incurvée, et forme un angle α avec l'axe de connexion D se réduisant à mesure que l'on s'éloigne du premier logement 90.

La rampe de déverrouillage 90 comprend avantageusement une partie proximale 98 par rapport au premier logement 90, la partie proximale 98 formant un angle β inférieur à 40°, de préférence 20° avec tout plan P perpendiculaire à l'axe de connexion D.

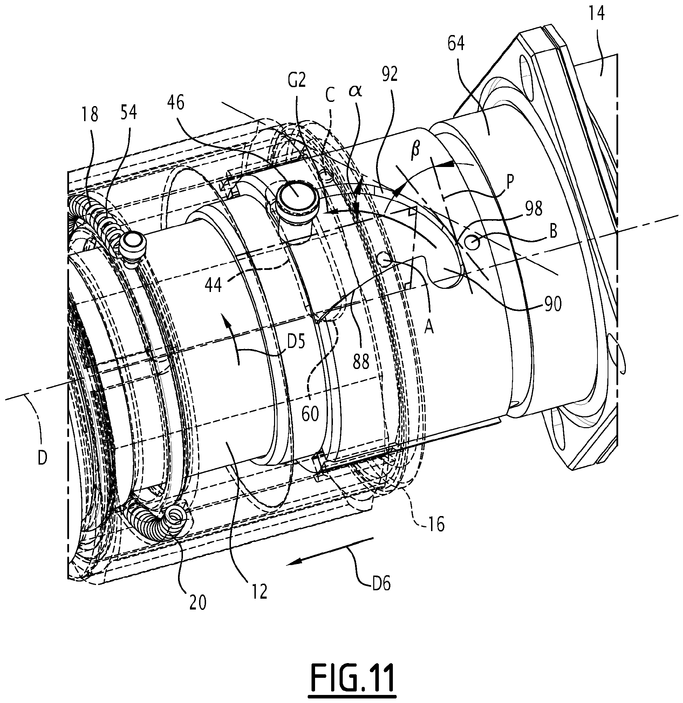

Dit autrement, la rampe de déverrouillage 92 possède une partie proximale 98 très inclinée par rapport à l'axe de connexion D, et donc très peu inclinée par rapport à tout plan P perpendiculaire à l'axe de connexion D, de sorte que la réaction R2 de la rampe de déverrouillage 92 sur le pion 46 est très forte au début du deuxième glissement G2. Puis la rampe de déverrouillage 92 s'incurve progressivement jusqu'à devenir, dans l'exemple représenté, quasiment parallèle à l'axe de connexion D au voisinage de la position du pion 46 sur la figure 11.

Le fonctionnement de l'ensemble 10 se déduit de sa structure et va maintenant être décrit brièvement.

Initialement, la première partie 12 et la deuxième partie 14 sont par exemple dans la configuration déverrouillée représentée sur les figures 1 et 2. Le contact électrique mâle 24 et le contact électrique femelle 62 sont déconnectés. Les câbles électriques 34 et 68 ne sont donc pas en contact électrique l'un avec l'autre.

Puis, dans une phase de connexion de l'ensemble 10, l'utilisateur (non représenté) déplace la première partie 12 et la deuxième partie 14 de la configuration déverrouillée progressivement vers la configuration verrouillée représentée sur la figure 9, en passant par la configuration intermédiaire représentée sur les figures 7 et 8.

L'utilisateur aligne les repères A et B et on réalise un déplacement manuel D1 (figure 5) de la première partie 12 et la deuxième partie 14 axialement l'une par rapport à l'autre depuis la configuration déverrouillée jusqu'à la configuration représentée sur la figure 5. Le rail 40 coulisse dans la rainure 42, ce qui guide le mouvement de translation de la première partie 12 et de la deuxième partie 14 l'une par rapport à l'autre selon l'axe de connexion D et empêche une rotation de la première partie 12 par rapport à la deuxième partie 14 autour de l'axe de connexion D.

Le pion 46, comme représenté sur la figure 5, vient en contact avec la rampe de verrouillage 88 et réalise le premier glissement G1 sur la rampe de verrouillage. La rampe de verrouillage 88 réagit sur le pion 46 et provoque le déplacement automatique D2 de la bague 16 depuis sa position de repos par rapport à la première partie 12 vers sa première position intermédiaire représentée sur la figure 7. Pendant le premier glissement G1, le pion 46 se déplace dans la lumière 44 depuis la position de repos également représentée sur la figure 3, dans laquelle le pion 46 butte contre l'extrémité 60 de la lumière 44. Pendant le premier glissement G1, le ressort 54 du système de rappel 18 se comprime.

Le passage vers la configuration verrouillée se poursuit par le déplacement manuel D3 (figure 7) de la première partie 12 en translation axiale par rapport à la deuxième partie 14. Ceci provoque le déplacement automatique D4 de la bague 16 angulairement en sens contraire par rapport à la première partie 12, de la première position intermédiaire (représentée sur la figure 7) à la position de verrouillage (représentée sur la figure 9). Par rapport à la deuxième partie 14, le pion 46 effectue le déplacement D4' représenté sur la figure 7 et est reçu dans le premier logement 90. La bague 16 est alors dans la position de verrouillage. Dans cette position, le pion 46 verrouille la première partie 12 par rapport à la deuxième partie 14, car le pion 46 butte contre la surface de buttée 94.

Pendant le premier glissement G1 et le déplacement D4' du pion 46, le contact mâle 24 vient s'insérer entre les lamelles 74 du contact électrique femelle 62 et un contact électrique s'établit.

Dans une phase de déconnexion de l'ensemble 10, l'utilisateur réalise le déplacement manuel D5 (figure 10) de la bague 16 en rotation par rapport à la première partie 12 autour de l'axe de connexion D. La première partie 12 est bloquée en rotation par rapport à la deuxième partie 14 par le rail 40 situé dans la rainure 42. Ceci sort le pion 46 du premier logement 90 et provoque le deuxième glissement G2 du pion sur la rampe de déverrouillage 92. La rampe de déverrouillage 92 réagit axialement sur le plan 46 en lui appliquant la force R2. La composante axiale de la force R2 se communique à la première partie 12 et éloigne la première partie 12 de la deuxième partie 14 axialement à partir de la configuration verrouillée. Ceci correspond à la flèche D6 sur les figures 10 et 11.

Du fait de l'incurvation de la rampe de déverrouillage 92, la force de déboîtement qui s'applique sur la première partie 12 est initialement très forte et se réduit au fur et à mesure du deuxième glissement G2.

Au début du mouvement de déboîtement, le pion 46 parcourt la partie proximale 98 de la rampe de déverrouillage 92. La réaction appliquée sur la première partie 12 est alors très forte et permet de faire glisser le joint d'étanchéité 22 sur la surface d'étanchéité 96 (voir glissement G3 sur la figure 9).

Ensuite, lorsque le joint d'étanchéité 22 a quitté la surface d'étanchéité 96, la force de déboîtement initialement importante n'est plus nécessaire. Le pion 46 poursuit sa course sur le reste de la rampe de déverrouillage 92 et arrive dans la position représentée sur la figure 11, dans laquelle il se situe à l'autre extrémité de la lumière 44 par rapport à l'extrémité 60.

L'utilisateur peut alors exercer une action manuelle de translation sur la première partie 12 pour continuer de l'éloigner de la deuxième partie 14.

Grâce aux caractéristiques décrites ci-dessus, la connexion et la déconnexion de la première partie 12 et de la deuxième partie 14 sont facilitées. La rampe de verrouillage 88 et le premier logement 90 forment avec le pion 46 un système à baïonnette « automatique », car il n'est pas nécessaire de tourner la bague 16 par rapport à la première partie 12 pour obtenir le verrouillage. Le verrouillage s'effectue au contraire automatiquement grâce au premier glissement G1 puis au mouvement D4' du pion 46.

En outre, le déverrouillage est aisé, grâce à la coopération du pion 46 avec la rampe de déverrouillage 92. Cette coopération crée une force de déboîtement de la première partie 12 initialement très forte, permettant de vaincre la friction du joint d'étanchéité 22 sur la surface d'étanchéité 96.

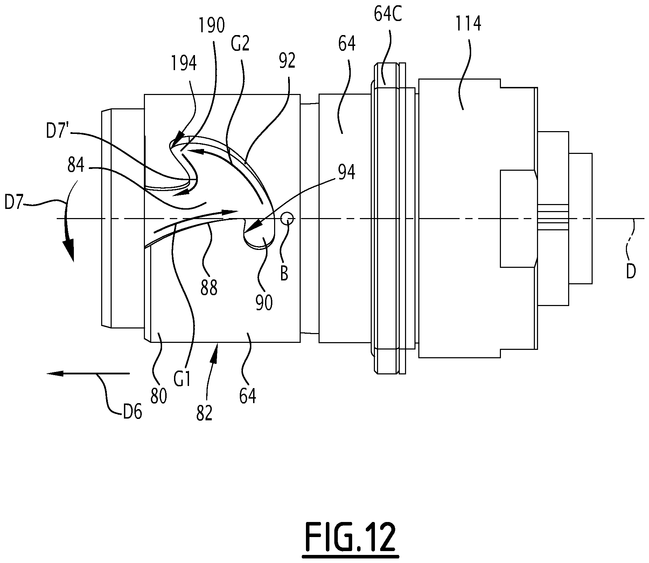

En référence à la figure 12, on va maintenant décrire une deuxième partie 114 constituant une variante de la deuxième partie 14 représentée sur les figures 1 à 11. La deuxième partie 114 est analogue à la première partie 14. Les éléments analogues portent les mêmes références numériques et ne seront pas décrits à nouveau. Seuls les différences seront décrites en détail ci-après.

L'évidement 84 de la deuxième partie 114 définit également un deuxième logement 190 adapté pour recevoir le pion 46 à l'issue du deuxième glissement G2.

Le deuxième logement 190 définit une deuxième buttée 194 axiale bloquant le pion 46 axialement par rapport à la deuxième partie 114 dans le sens du déboîtement de l'ensemble 10.

Le deuxième logement 190 est en outre adapté pour immobiliser la bague 16 en rotation dans une deuxième position intermédiaire (qui est environ celle représentée sur la figure 11) par rapport à la première partie 12 lorsque le pion 46 est dans le deuxième logement 190.

Le deuxième logement 190 est configuré pour qu'un déplacement manuel D7 de la bague 16 en rotation autour de l'axe de connexion D par rapport à la première partie 12 dans le même sens que le déplacement D4 représenté sur la figure 7 sorte le pion 46 du deuxième logement 190 et autorise le déplacement axial D6 de la première partie 12 et de la deuxième partie 114 l'une par rapport à l'autre vers la configuration déverrouillée.

Lorsque le pion 46 est reçu dans le deuxième logement 190, c'est-à-dire quand la bague 16 est dans la deuxième position intermédiaire, le déboîtement de la première partie 12 axialement par rapport à la deuxième partie 114 est temporairement bloqué, jusqu'à ce que l'utilisateur applique le mouvement D7 de déblocage de la bague 16. Ce mouvement de déblocage provoque un déplacement D7' (figure 12) du pion 46 par rapport à la deuxième partie 114. A l'issu de ce mouvement D7', le déplacement de la première partie 12 et de la deuxième partie 114 vers la configuration déverrouillée peut se poursuivre.

Grâce au deuxième logement 190, le déboîtement de la première partie 12 par rapport à la deuxième partie 114 est temporairement interrompu. L'utilisateur, après avoir imprimé le mouvement de rotation D5 à la bague 16 a le temps de saisir la première partie 12 et puis alors d'imprimer le mouvement de rotation inverse D7 avant de récupérer manuellement la première partie 12. Ceci permet de décomposer le déboîtement en deux phases et de mieux contrôler manuellement.

## Revendications

1. Ensemble (10) comprenant une première partie (12) et une deuxième partie (14 ; 114) mobiles l'une par rapport à l'autre en translation selon un axe de connexion (D) entre une configuration verrouillée, dans laquelle la première partie (12) et la deuxième partie (14 ; 114) sont en partie emboîtées l'une dans l'autre et verrouillées l'une sur l'autre, et une configuration déverrouillée, dans laquelle la première partie (12) et la deuxième partie (14 ; 114) sont à l'écart l'une de l'autre, dans lequel:
- la première partie (12) comprend l'un d'un rail (40) et d'une rainure (42), et la deuxième partie (14 ; 114) comprend l'autre d'un rail (40) et d'une rainure (42), le rail (40) étant configuré pour coulisser axialement dans la rainure (42) lorsque la première partie (12) et la deuxième partie (14 ; 114) passent de la configuration déverrouillée à la configuration verrouillée,
- l'ensemble (10) comprend une bague (16) montée rotative sur la première partie (12) autour de l'axe de connexion (D), la bague (16) définissant une surface (48) radialement intérieure par rapport à l'axe de connexion (D) et comportant au moins un pion (46), le pion (46) faisant saillie à partir de la surface (48) radialement intérieure,
- la deuxième partie (14 ; 114) définit une rampe de verrouillage (88), un premier logement (90) et une rampe de déverrouillage (92), et
- l'ensemble (10) comprend un système de rappel (18) pour exercer une force de rappel (R1) sur la bague (16) vers une position de repos,
la rampe de verrouillage (88) et le premier logement (90) étant configurés pour qu'un déplacement manuel (D1) de la première partie (12) et de la deuxième partie (14 ; 114) axialement l'une par rapport à l'autre de la configuration déverrouillée à une configuration intermédiaire provoque un premier glissement (G1) du pion (46) sur la rampe de verrouillage (88), et un déplacement automatique (D2) de la bague (16) angulairement dans un premier sens par rapport à la première partie (12) entre la position de repos et une première position intermédiaire, et pour qu'un déplacement manuel (D3) de la première partie (12) et la deuxième partie (14 ; 114) axialement l'une par rapport à l'autre de la configuration intermédiaire à la configuration verrouillée permette un déplacement automatique (D4) de la bague (16) angulairement dans un deuxième sens contraire au premier sens par rapport à la première partie (12), de la première position intermédiaire à une position de verrouillage sous l'action du système de rappel (18), le pion (46) étant reçu dans le premier logement (90) lorsque la bague (16) est dans la position de verrouillage, le premier logement (90) définissant une première butée axiale (94) adaptée pour bloquer le pion (46) axialement par rapport à la deuxième partie (14 ; 114),
la rampe de déverrouillage (92) étant configurée pour qu'un déplacement manuel (D5) de la bague (16) en rotation autour de l'axe de connexion (D) dans ledit premier sens par rapport à la première partie (12) à partir de la position de verrouillage sorte le pion (46) du premier logement (90) et provoque un deuxième glissement (G2) du pion (46) sur la rampe de déverrouillage (92), la rampe de déverrouillage (92) réagissant axialement (R2) sur le pion (46) pour éloigner la première partie (12) et la deuxième partie (14 ; 114) axialement l'une de l'autre à partir de la configuration verrouillée.

2. Ensemble (10) selon la revendication 1, dans lequel :
- la première partie (12) comprend l'un d'un contact électrique mâle (24) et d'un contact électrique femelle (62), et un premier manchon (26) isolant électrique entourant ledit contact électrique autour de l'axe de connexion (D),
- la deuxième partie (14 ; 114) comprend l'autre d'un contact électrique mâle (24) et d'un contact électrique femelle (62), et un deuxième manchon (64) isolant électrique entourant ledit contact électrique autour de l'axe de connexion (D),
le contact électrique de la première partie (12) étant en contact électrique avec le contact électrique de la deuxième partie (14 ; 114) dans la configuration verrouillée, et à l'écart du contact électrique de la deuxième partie (14 ; 114) dans la configuration déverrouillée.

3. Ensemble (10) selon la revendication 1 ou 2, dans lequel la deuxième partie (14 ; 114) comprend une paroi (80) s'étendant au moins en partie autour de l'axe de connexion (D), la paroi (80) définissant une surface (82) radialement extérieure formant un évidement (84) radial, l'évidement (84) s'ouvrant axialement du côté de la première partie (12), la rampe de verrouillage (88), le premier logement (90) et la rampe de déverrouillage (92) étant formés par un bord curviligne (86) de l'évidement (84).

4. Ensemble (10) selon l'une quelconque des revendications 1 à 3, dans lequel la première partie (12) comprend une paroi (26E) s'étendant au moins en partie autour de l'axe de connexion (D), la paroi (26E) définissant une lumière (44) s'étendant perpendiculairement à l'axe de connexion (D), le pion (46) traversant radialement cette lumière (44).

5. Ensemble (10) selon l'une quelconque des revendications 1 à 4, dans lequel le système de rappel (18) comprend une rainure (52) formée par la première partie (12) ou la bague (16) et orientée circonférentiellement autour de l'axe de connexion (D), et un ressort (54) logé dans la rainure (42), le ressort (54) ayant une première extrémité (56) fixée sur la première partie (12), et une deuxième extrémité fixée (58) sur la bague (16).

6. Ensemble (10) selon l'une quelconque des revendications 1 à 5, dans lequel la rampe de déverrouillage (92) est incurvée, la rampe de déverrouillage (92) formant un angle (α) avec l'axe de connexion (D) se réduisant à mesure que l'on s'éloigne du premier logement (90).

7. Ensemble (10) selon l'une quelconque des revendications 1 à 6, dans lequel la rampe de déverrouillage (92) comprend une partie proximale (98) par rapport au premier logement (90), la partie proximale (98) formant un angle (β) inférieur à 40°, de préférence 20°, avec tout plan (P) perpendiculaire à l'axe de connexion (D).

8. Ensemble (10) selon l'une quelconque des revendications 1 à 7, comprenant en outre au moins un joint d'étanchéité (22) torique fixé sur l'un de la première partie (12) et la deuxième partie (14 ; 114) autour de l'axe de connexion (D), l'autre de la première partie (12) et la deuxième partie (14 ; 114) définissant une surface d'étanchéité (96) adaptée pour coopérer avec le joint d'étanchéité (22) dans la configuration verrouillée, le deuxième glissement (G2) du pion (46) sur la rampe de déverrouillage (92) à partir du premier logement (90) provoquant un glissement (G3) axial du joint d'étanchéité (22) sur la surface (48) d'étanchéité et une séparation axiale entre le joint d'étanchéité (22) et la surface (48) d'étanchéité.

9. Ensemble (10) selon l'une quelconque des revendications 1 à 8, dans lequel la deuxième partie (114) définit également un deuxième logement (190) adapté pour recevoir le pion (46) à l'issue du deuxième glissement (G2), le deuxième logement (190) définissant une deuxième butée axiale (194) bloquant le pion (46) axialement par rapport à la deuxième partie (114), le deuxième logement (190) étant en outre adapté pour immobiliser la bague (16) en rotation dans une deuxième position intermédiaire par rapport à la première partie (12) lorsque le pion (46) est dans le deuxième logement (190), le deuxième logement (190) étant configuré pour qu'un déplacement manuel (D7) de la bague (16) en rotation autour de l'axe de connexion (D) par rapport à la première partie (12) dans ledit deuxième sens à partir de la deuxième position intermédiaire sorte le pion (46) du deuxième logement (190) et autorise un déplacement axial (D6) de la première partie (12) et de la deuxième partie (114) l'une par rapport à l'autre vers la configuration déverrouillée.

10. Procédé de verrouillage-déverrouillage d'une première partie (12) et d'une (14 ; 114) mobiles l'une par rapport à l'autre en translation selon un axe de connexion (D) entre une configuration verrouillée, dans laquelle la première partie (12) et la deuxième partie (14 ; 114) sont en partie emboîtées l'une dans l'autre et verrouillées l'une sur l'autre, et une configuration déverrouillée, dans laquelle la première partie (12) et la deuxième partie (14 ; 114) sont à l'écart l'une de l'autre, la première partie (12) comprenant l'un d'un rail (40) et d'une rainure (42), et la deuxième partie (14 ; 114) comprenant l'autre d'un rail (40) et d'une rainure (42), une bague (16) étant montée rotative sur la première partie (12) autour de l'axe de connexion (D), la bague (16) définissant une surface (48) radialement intérieure par rapport à l'axe de connexion (D) et comportant au moins un pion (46), le pion (46) faisant saillie à partir de la surface (48) radialement intérieure, la deuxième partie (14 ; 114) définissant une rampe de verrouillage (88), un premier logement (90) et une rampe de déverrouillage (92), un système de rappel (18) exerçant une force de rappel (R1) sur la bague (16) vers une position de repos par rapport à la première partie (12), le procédé comprenant les étapes suivantes :
- coulissement du rail (40) axialement dans la rainure (42) alors que la première partie (12) et la deuxième partie (14 ; 114) passent de la configuration déverrouillée à la configuration verrouillée,
- déplacement manuel (D1) de la première partie (12) et de la deuxième partie (14 ; 114) axialement l'une par rapport à l'autre de la configuration déverrouillée à une configuration intermédiaire,
- du fait dudit déplacement manuel (D1), premier glissement (G1) du pion (46) sur la rampe de verrouillage (88), et déplacement automatique (D2) de la bague (16) angulairement dans un premier sens par rapport à la première partie (12) entre la position de repos et une première position intermédiaire,
- déplacement manuel (D3) de la première partie (12) et la deuxième partie (14 ; 114) axialement l'une par rapport à l'autre de la configuration intermédiaire à la configuration verrouillée,
- du fait dudit déplacement manuel (D3), déplacement automatique (D4) de la bague (16) par rapport à la première partie (12) angulairement, dans un deuxième sens contraire au premier sens, de la première position intermédiaire à une position de verrouillage sous l'action du système de rappel (18), le pion (46) étant reçu dans le premier logement (90) lorsque la bague (16) est dans la position de verrouillage, le premier logement (90) définissant une première butée axiale (94) bloquant le pion (46) axialement par rapport à la deuxième partie (14 ; 114),
- déplacement manuel (D5) de la bague (16) en rotation autour de l'axe de connexion (D) dans ledit premier sens par rapport à la première partie (12) à partir de la position de verrouillage, et
- du fait dudit déplacement manuel (D5), sortie du pion (46) du premier logement (90) et deuxième glissement (G2) du pion (46) sur la rampe de déverrouillage (92), la rampe de déverrouillage (92) réagissant axialement (R2) sur le pion (46) pour éloigner la première partie (12) et la deuxième partie (14 ; 114) axialement l'une de l'autre à partir de la configuration verrouillée.

## Patentansprüche

1. Anordnung (10), umfassend ein erstes Teil (12) und ein zweites Teil (14; 114), die in Bezug aufeinander translatorisch entlang einer Verbindungsachse (D) zwischen einer verriegelten Konfiguration, in der das erste Teil (12) und der zweite Teil (14; 114) miteinander verschachtelt und miteinander verriegelt sind, und einer entriegelten Konfiguration, in der das erste Teil (12) und das zweite Teil (14; 114) voneinander beabstandet sind, beweglich sind, wobei:
- das erste Teil (12) umfasst entweder eine Schiene (40) oder einer Nut (42), während das zweite Teil (14; 114) das jeweils andere Element umfasst, wobei die Schiene (40) konfiguriert ist, um sich in axialer Richtung zu bewegen, um die Verriegelung zu lösen und axial in der Nut (42) zu gleiten, wenn das erste Teil (12) und das zweite Teil (14; 114) von der entriegelten Konfiguration in die verriegelte Konfiguration übergehen,
- die Anordnung (10) einen Ring (16) umfasst, der drehbar um die Verbindungsachse (D) an dem ersten Teil (12) montiert ist, wobei der Ring (16) eine Oberfläche (48) radial innen in Bezug auf die Verbindungsachse (D) definiert, und mindestens einen Stift (46) umfasst, wobei der Stift (46) von der radial inneren Oberfläche (48) hervorsteht,
- das zweite Teil (14; 114) eine Verriegelungsrampe (88), eine erste Aufnahme (90) und eine Entriegelungsrampe (92) definiert, und
- die Anordnung (10) ein Rückholsystem (18) umfasst, um auf den Ring (16) eine Rückholkraft (R1) in Richtung einer Ruheposition auszuüben,
wobei die Verriegelungsrampe (88) und die erste Aufnahme (90) konfiguriert sind, damit eine manuelle Bewegung (D1) des ersten Teils (12) und des zweiten Teils (14; 114) axial in Bezug aufeinander von der entriegelten Konfiguration in eine Zwischenkonfiguration ein erstes Gleiten (G1) des Stifts (46) auf der Verriegelungsrampe (88) bewirkt, und eine automatische Winkelbewegung (D2) des Rings (16) in einer ersten Richtung in Bezug auf das erste Teil (12) zwischen der Ruheposition und einer ersten Zwischenposition, und damit eine manuelle Bewegung (D3) des ersten Teils (12) und des zweiten Teils (14; 114) axial in Bezug aufeinander von der Zwischenkonfiguration zu der verriegelten Konfiguration eine automatische Winkelbewegung (D4) des Rings (16) in einer zweiten Richtung entgegengesetzt zu der ersten Richtung in Bezug auf das erste Teil (12) von der ersten Zwischenposition zu einer Verriegelungsposition unter der Wirkung des Rückstellsystems (18) ermöglicht, wobei der Stift (46) in der ersten Aufnahme (90) aufgenommen ist, wenn der Ring (16) in der Verriegelungsposition ist, wobei die erste Aufnahme (90) einen ersten axialen Anschlag (94) definiert, der angepasst ist, um den Stift (46) axial in Bezug auf den zweiten Abschnitt (14; 114) zu verriegeln,
die Entriegelungsrampe (92) konfiguriert ist, damit eine manuelle Bewegung (D5) des Rings (16) in Drehung um die Verbindungsachse (D) in der ersten Richtung in Bezug auf das erste Teil (12) aus der Verriegelungsposition den Stift (46) aus der ersten Aufnahme (90) herauszieht und ein zweites Gleiten (G2) des Stifts (46) auf der Entriegelungsrampe (92) bewirkt, wobei die Entriegelungsrampe (92) axial (R2) auf den Stift (46) reagiert, um das erste Teil (12) und das zweite Teil (14; 114) aus der verriegelten Konfiguration axial voneinander wegzubewegen.

2. Anordnung (10) nach Anspruch 1, wobei:
- das erste Teil (12) eines von einem elektrischen Steckerkontakt (24) oder einem elektrischen Buchsenkontakt (62) und einer ersten elektrisch isolierenden Hülse (26), die den elektrischen Kontakt um die Verbindungsachse (D) umgibt, umfasst,
- das zweite Teil (14; 114) das andere von einem elektrischen Steckerkontakt (24) oder einem elektrischen Buchsenkontakt (62) und einer zweiten elektrisch isolierenden Hülse (64), die den elektrischen Kontakt um die Verbindungsachse (D) umgibt, umfasst,
wobei der elektrische Kontakt des ersten Teils (12) in der verriegelten Konfiguration in elektrischem Kontakt mit dem elektrischen Kontakt des zweiten Teils (14; 114) ist und in der entriegelten Konfiguration von dem elektrischen Kontakt des zweiten Teils (14; 114) beabstandet ist.

3. Anordnung (10) nach Anspruch 1 oder 2, wobei das zweite Teil (14; 114) eine Wand (80) umfasst, die sich zumindest teilweise um die Verbindungsachse (D) erstreckt, wobei die Wand (80) eine radial äußere Oberfläche (82) definiert, die eine radiale Aussparung (84) bildet, wobei die Aussparung (84) axial auf der Seite des ersten Teils (12) öffnet, wobei die Verriegelungsrampe (88), die erste Aufnahme (90) und die Entriegelungsrampe (92) durch einen gekrümmten Rand (86) der Aussparung (84) gebildet sind.

4. Anordnung (10) nach einem der Ansprüche 1 bis 3, wobei das erste Teil (12) eine Wand (26E) umfasst, die sich zumindest teilweise um die Verbindungsachse (D) erstreckt, wobei die Wand (26E) ein Lumen (44) definiert, das sich senkrecht zu der Verbindungsachse (D) erstreckt, wobei der Stift (46) dieses Lumen (44) radial durchdringt.

5. Anordnung (10) nach einem der Ansprüche 1 bis 4, wobei das Rückholsystem (18) eine Nut (52), die durch das erste Teil (12) oder den Ring (16) gebildet ist und in Umfangsrichtung um die Verbindungsachse (D) ausgerichtet ist, und eine Feder (54), die in der Nut (42) aufgenommen ist, umfasst, wobei die Feder (54) ein erstes Ende (56), das an dem ersten Teil (12) befestigt ist, und ein zweites Ende (58), das an dem Ring (16) befestigt ist, aufweist.

6. Anordnung (10) nach einem der Ansprüche 1 bis 5, wobei die Entriegelungsrampe (92) gekrümmt ist, die Entriegelungsrampe (92) einen Winkel (α) mit der Verbindungsachse (D) bildet, der sich mit zunehmender Entfernung von der ersten Aufnahme (90) verringert.

7. Anordnung (10) nach einem der Ansprüche 1 bis 6, wobei die Entriegelungsrampe (92) einen proximalen Abschnitt (98) in Bezug auf die erste Aufnahme (90) umfasst, wobei der proximale Abschnitt (98) einen Winkel (β) von weniger als 40°, vorzugsweise 20°, mit jeder Ebene (P) bildet, die senkrecht zu der Verbindungsachse (D) ist.

8. Anordnung (10) nach einem der Ansprüche 1 bis 7, ferner umfassend mindestens eine O-Ring-Dichtung (22), die an einem von dem ersten Teil (12) und dem zweiten Teil (14; 114) um die Verbindungsachse (D) befestigt ist, wobei das andere von dem ersten Teil (12) und dem zweiten Teil (14; 114) eine Dichtungsfläche (96) definiert, die geeignet ist, um in der verriegelten Konfiguration mit der Dichtung (22) zusammenzuwirken, wobei das zweite Gleiten (G2) des Stifts (46) auf der Entriegelungsrampe (92) von der ersten Aufnahme (90) aus ein axiales Gleiten (G3) der Dichtung (22) auf der Dichtungsfläche (48) und eine axiale Trennung zwischen der Dichtung (22) und der Dichtungsfläche (48) bewirkt.

9. Anordnung (10) nach einem der Ansprüche 1 bis 8, wobei das zweite Teil (114) auch eine zweite Aufnahme (190) definiert, die geeignet ist, um den Stift (46) am Ende des zweiten Gleitvorgangs (G2) aufzunehmen, wobei die zweite Aufnahme (190) einen zweiten axialen Anschlag (194) definiert, der den Stift (46) axial in Bezug auf den zweiten Abschnitt (114) blockiert, wobei die zweite Aufnahme (190) ferner angepasst ist, um den Ring (16) in einer zweiten Zwischenposition in Bezug auf das erste Teil (12) gegen Drehung zu sichern, wenn der Stift (46) in der zweiten Aufnahme (190) ist, wobei die zweite Aufnahme (190) konfiguriert ist, damit eine manuelle Bewegung (D7) des Rings (16) bei Drehung um die Verbindungsachse (D) in Bezug auf das erste Teil (12) in der zweiten Richtung aus der zweiten Zwischenposition den Stift (46) aus der zweiten Aufnahme (190) herauszieht und eine axiale Bewegung (D6) des ersten Teils (12) und des zweiten Teils (114) in Bezug aufeinander in Richtung der entriegelten Konfiguration zulässt.

10. Ver-/Entriegelungsverfahren eines ersten Teils (12) und eines zweiten Teils (14; 114), die in Bezug aufeinander translatorisch entlang einer Verbindungsachse (D) zwischen einer verriegelten Konfiguration, in der das erste Teil (12) und der zweite Teil (14; 114) miteinander verschachtelt und miteinander verriegelt sind, und einer entriegelten Konfiguration, in der das erste Teil (12) und das zweite Teil (14; 114) voneinander beabstandet sind, beweglich sind, das erste Teil (12) umfassend eines von einer Schiene (40) und einer Nut (42), und das zweite Teil (14; 114) umfassend das andere von einer Schiene (40) und einer Nut (42), wobei ein Ring (16) drehbar um die Verbindungsachse (D) auf dem ersten Teil (12) montiert ist, der Ring (16) eine Oberfläche (48) definiert, die in Bezug auf die Verbindungsachse (D) radial innen ist und mindestens einen Stift (46) umfasst, wobei der Stift (46) von der radial inneren Oberfläche (48) hervorsteht, das zweite Teil (14; 114) eine Verriegelungsrampe (88), eine erste Aufnahme (90) und eine Entriegelungsrampe (92) definiert, und ein Rückholsystem (18), das eine Rückholkraft (R1) auf den Ring (16) in Richtung einer Ruheposition in Bezug auf das erste Teil (12) ausübt, das Verfahren umfassend die folgenden Schritte:
- Gleiten der Schiene (40) axial in der Nut (42), während das erste Teil (12) und das zweite Teil (14; 114) von der entriegelten Konfiguration in die verriegelte Konfiguration übergehen,
- manuelles Bewegen (D1) des ersten Teils (12) und des zweiten Teils (14; 114) axial in Bezug aufeinander von der entriegelten Konfiguration in eine Zwischenkonfiguration,
- aufgrund der manuellen Bewegung (D1), erstes Gleiten (G1) des Stifts (46) auf der Verriegelungsrampe (88) und eine automatische Winkelbewegung (D2) des Rings (16) in einer ersten Richtung in Bezug auf das erste Teil (12) zwischen der Ruheposition und einer ersten Zwischenposition,
- manuelles Bewegen (D3) des ersten Teils (12) und des zweiten Teils (14; 114) axial zueinander von der Zwischenkonfiguration in die verriegelte Konfiguration,
- aufgrund der manuellen Bewegung (D3), automatisches Winkelbewegen (D4) des Rings (16) in Bezug auf das erste Teil (12) in einer zweiten Richtung, die der ersten Richtung entgegengesetzt ist, von der ersten Zwischenposition in eine Verriegelungsposition unter der Wirkung des Rückholsystems (18), wobei der Stift (46) in der ersten Aufnahme (90) aufgenommen ist, wenn der Ring (16) in der Verriegelungsposition ist, wobei die erste Aufnahme (90) einen ersten axialen Anschlag (94) definiert, der den Stift (46) axial in Bezug auf das zweite Teil (14; 114) arretiert,
- manuelles Bewegen (D5) des Rings (16) durch Drehen um die Verbindungsachse (D) in der ersten Richtung in Bezug auf das erste Teil (12) aus der Verriegelungsposition, und
- durch das manuelle Bewegen (D5), Austreten des Stifts (46) aus der ersten Aufnahme (90) und zweites Gleiten (G2) des Stifts (46) auf der Entriegelungsrampe (92), wobei die Entriegelungsrampe (92) axial (R2) auf den Stift (46) reagiert, um das erste Teil (12) und das zweite Teil (14; 114) axial voneinander weg von der verriegelten Konfiguration zu bewegen.

## Claims

1. Assembly (10) comprising a first part (12) and a second part (14; 114) movable relative to each other in translation along a connection axis (D) between a locked configuration, in which the first part (12) and second part (14; 114) are partly nested one inside the other and locked to each other, and an unlocked configuration, in which the first part (12) and the second part (14; 114) are separated from each other, wherein:
- the first part (12) comprises one of a rail (40) and a groove (42), and the second part (14; 114) comprises the other of a rail (40), and a groove (42) wherein the rail (40) is designed to slide axially in the groove (42) when the first part (12) and the second part (14; 114) pass from the unlocked configuration to the locked configuration,
- the assembly (10) comprises a ring (16) rotatably mounted on the first part (12) about the connection axis (D), the ring (16) defining a radially inner surface (48) with respect to the connection axis (D) and comprising at least one pin (46), the pin (46) projecting from the radially inner surface (48),
- the second part (14; 114) defines a locking ramp (88), a first housing (90) and an unlocking ramp (92), and
- the assembly (10) comprises a return system (18) to exert a return force (R1) on the ring (16) to a position of rest,
the locking ramp (88) and the first housing (90) being configured so that a manual displacement (D1) of the first part (12) and the second part (14; 114) axially relative to each other from the unlocked configuration to an intermediate configuration causes a first sliding (G1) of the pin (46) on the locking ramp (88), and an automatic displacement (D2) of the ring (16) angularly in a first direction with respect to the first part (12) between the position of rest and a first intermediate position, and so that a manual displacement (D3) of the first part (12) and the second part (14; 114) axially relative to each other from the intermediate configuration to the locked configuration allows an automatic displacement (D4) of the ring (16) angularly in a second direction opposite the first direction with respect to the first part (12), from the first intermediate position to a locking position under the action of the return system (18), the pin (46) being received in the first housing (90) when the ring (16) is in the locking position, the first housing (90) defining a first axial stop (94) designed to block the pin (46) axially relative to the second part (14; 114),
the unlocking ramp (92) being so designed that a manual movement (D5) of the ring (16) in rotation about the connection axis (D) in said first direction with respect to the first part (12) from the locking position, makes the pin (46) exit the first housing (90) and causes a second sliding (G2) of the pin (46) on the unlocking ramp (92), the unlocking ramp (92) reacting axially (R2) on the pin (46) to move the first part (12) and the second part (14; 114) axially away from each other from the locked configuration.

2. Assembly (10) according to claim 1, wherein:
- the first part (12) comprises one of a male electrical contact (24) and a female electrical contact (62), and a first electrical insulating sleeve (26) surrounding said electrical contact about the connection axis (D),
- the second part (14; 114) comprises the other of a male electrical contact (24) and a female electrical contact (62), and a second electrical insulating sleeve (64) surrounding said electrical contact about the connection axis (D),
the electrical contact of the first part (12) being in electrical contact with the electrical contact of the second part (14; 114) in the locked configuration, and separated from the electrical contact of the second part (14; 114) in the unlocked configuration.

3. Assembly (10) according to claim 1 or 2, wherein the second part (14; 114) comprises a wall (80) extending at least in part about the connection axis (D), the wall (80) defining a radially outer surface (82) forming a radial recess (84), the recess (84) opening axially on the side of the first part (12), the locking ramp (88), the first housing (90) and the unlocking ramp (92) being formed by a curvilinear edge (86) of the recess (84).

4. Assembly (10) according to any one of claims 1 to 3, wherein the first part (12) comprises a wall (26E) extending at least in part about the connection axis (D), the wall (26E) defining a slot (44) extending perpendicularly to the connection axis (D), the pin (46) radially passing through this slot (44).

5. Assembly (10) according to any one of claims 1 to 4, wherein the return system (18) comprises a groove (52) formed by the first part (12) or the ring (16) and oriented circumferentially about of the connection pin (D), and a spring (54) housed in the groove (42), the spring (54) having a first end (56) fixed to the first part (12), and a second end fixed (58) to the ring (16).

6. Assembly (10) according to any one of claims 1 to 5, wherein the unlocking ramp (92) is curved, the unlocking ramp (92) forming an angle (α) with the connection axis (D) reducing as one moves away from the first housing (90).

7. Assembly (10) according to any one of claims 1 to 6, wherein the unlocking ramp (92) comprises a proximal portion (98) relative to the first housing (90), the proximal portion (98) forming a angle (β) less than 40°, preferably 20°, with any plane (P) perpendicular to the connection axis (D).

8. Assembly (10) according to any one of claims 1 to 7, further comprising at least one O-ring seal (22) fixed to one of the first part (12) and the second part (14; 114) about the connection axis (D), the other of the first part (12) and second part (14; 114) defining a sealing surface (96) designed to interact with the seal (22) in the locked configuration, the second sliding (G2) of the pin (46) on the unlocking ramp (92) from the first housing (90) causing an axial sliding (G3) of the seal (22) on the sealing surface (48) and an axial separation between the seal (22) and the sealing surface (48).

9. Assembly (10) according to any one of claims 1 to 8, wherein the second part (114) also defines a second housing (190) designed to receive the pin (46) at the end of the second sliding (G2), the second housing (190) defining a second axial stop (194) blocking the pin (46) axially relative to the second part (114), the second housing (190) being further designed to immobilize the ring (16) rotating in a second intermediate position relative to the first part (12) when the pin (46) is in the second housing (190), the second housing (190) being so designed that a manual movement (D7) of the ring (16) rotating about the connection axis (D) relative to the first part (12) in said second direction from the second intermediate position exits the pin (46) from the second housing (190) and allows an axial displacement (D6) of the first part (12) and of the second part (114) relative to each other to the unlocked configuration.

10. Method of locking-unlocking a first part (12) and a second part (14; 114) movable relative to each other in translation along a connection axis (D) between a locked configuration, in which the first part (12) and the second part (14; 114) are partly nested one inside the other and locked to each other, and an unlocked configuration, in which the first part (12) and the second part (14; 114) are spaced apart, the first part (12) comprising one of a rail (40) and a groove (42), and the second part (14; 114) comprising the other of a rail (40) and a groove (42), a ring (16) being rotatably mounted on the first part (12) about the connection axis (D), the ring (16) defining a radially inner surface (48) with respect to the connection axis (D) and comprising at least one pin (46), the pin (46) projecting from the radially inner surface (48), the second part (14; 114) defining a locking ramp (88), a first housing (90) and an unlocking ramp (92), a return system (18) exerting a return force (R1) on the ring (16) towards a position of rest with respect to the first part (12), the method comprising the following steps:
- sliding of the rail (40) axially in the groove (42) while the first part (12) and the second part (14; 114) pass from the unlocked configuration to the locked configuration,
- manual displacement (D1) of the first part (12) and the second part (14; 114) axially relative to each other from the unlocked configuration to an intermediate configuration,
- due to said manual displacement (D1), first sliding (G1) of the pin (46) on the locking ramp (88), and automatic displacement (D2) of the ring (16) angularly in a first direction relative to the first part (12) between the position of rest and a first intermediate position,
- manual movement (D3) of the first part (12) and the second part (14; 114) axially relative to each other from the intermediate configuration to the locked configuration,
- due to said manual displacement (D3), automatic displacement (D4) of the ring (16) relative to the first part (12) angularly in a second direction opposite the first direction from the first intermediate position to a locking position under the action of the return system (18), the pin (46) being received in the first housing (90) when the ring (16) is in the locking position, the first housing (90) defining a first axial stop (94) blocking the pin (46) axially relative to the second part (14; 114),
- manual movement (D5) of the ring (16) in rotation about the connection axis (D) in said first direction relative to the first part (12) from the locking position, and
- due to said manual movement (D5), exit of the pin (46) from the first housing (90) and second sliding (G2) of the pin (46) on the unlocking ramp (92), the unlocking ramp (92) reacting axially (R2) on the pin (46) to move the first part (12) and the second part (14; 114) axially away from each other from the locked configuration.
